# EUROPÄISCHE PATENTSCHRIFT

(11) **EP 0 921 949 B1**
(45) Veröffentlichungstag und Bekanntmachung des Hinweises auf die Patenterteilung: **19.09.2001**
(21) Anmeldenummer: 96946027.8
(22) Anmeldetag: 29.11.1996
(51) Int. Cl.: B42D 3/12

(54) **UMSCHLAG BZW. BEIHEFTER FÜR EINE ZEITSCHRIFT**
COVER AND INSERT FOR A PERIODICAL
COUVERTURE OU ENCART DE MAGAZINE

(30) Priorität: 19.08.1996 DE 29614310 U
(43) Veröffentlichungstag der Anmeldung: 16.06.1999
(73) Patentinhaber: Heckel Druck und Verpackungen GmbH, 90475 Nürnberg (DE)
(72) Erfinder: DREIER, Joachim, D-90584 Allersberg (DE)
(74) Vertreter: LOUIS, PÖHLAU, LOHRENTZ & SEGETH
(86) Internationale Anmeldenummer: DE9602299
(87) Internationale Veröffentlichungsnummer: WO9807580

(56) Entgegenhaltungen:
- DE-U- 8 712 624
- DE-U- 29 504 512
- FR-A- 2 210 948

## Beschreibung

Die Erfindung betrifft einen Umschlag bzw. Beihefter für eine Zeitschrift, der ein Rückenteil und ein Vorderteil aufweist, die miteinander entlang einer Bindefaltlinie verbunden sind, wobei das Vorderteil ein Fach für eine CD-ROM aufweist, das in das Vorderteil des Umschlages bzw. des Beihefters integriert ist.

Bei bekannten Umschlägen bzw. Beiheftern für eine Zeitschrift ist das Fach für eine CD-ROM von einer Tüte aus durchsichtigem Kunststoff-Folienmaterial gebildet, wobei die Tüte am Vorderteil des Umschlages bzw. Beihefters festgeklebt ist. Das macht einen vergleichsweise provisorischen unprofessionellen Eindruck. Außerdem wird bei der Entnahme der CD-ROM oftmals der Umschlag zerstört.

Ein Umschlag bzw. Beihefter der eingangs genannten Art ist aus der FR-A 2 210 948 bekannt.

Der Erfindung liegt die Aufgabe zugrunde, einen Umschlag bzw. Beihefter der eingangs genannten Art zu schaffen, wobei bei der Entnahme der CD-ROM der Umschlag bzw. Beihefter nicht zerstört wird.

Diese Aufgabe wird bei einem Umschlag bzw. Beihefter der eingangs genannten Art erfindungsgemäß dadurch gelöst, daß das Vorderteil aus einem ersten Flächenelement, einem mit dem ersten Flächenelement entlang einer ersten Faltlinie verbundenen zweiten Flächenelement und einem mit dem zweiten Flächenelement entlang einer zweiten Faltlinie verbundenen dritten Flächenelement besteht, wobei die erste und die zweite Faltlinie zueinander und zur Bindefaltlinie parallel orientiert sind, das erste und das zweite Flächenelement jeweils mit einem Stanzloch ausgebildet sind, das dritte Flächenelement mit einer an die CD-ROM angepaßten Ausstanzung ausgebildet ist, und das erste, das zweite und das dritte Flächenelement miteinander derart verklebt sind, daß an der zweiten Faltlinie zwischen dem zweiten und dem dritten Flächenelement ein Einsteckspalt für die CD-ROM verbleibt.

Um die CD-ROM im solchermaßen ausgebildeten Umschlag bzw. Beihefter, d.h. in dem im Umschlag bzw. Beihefter integrierten CD-ROM-Fach unverlierbar bzw. diebstahlsicher unterzubringen, ist es bei einem Umschlag bzw. Beihefter der zuletzt genannten Art bevorzugt, wenn der Einsteckspalt an den Durchmesser der CD-ROM angepaßt ist.

Die beiden Stanzlöcher im ersten und im zweiten Flächenelement sind in bezug auf die erste Faltlinie vorzugsweise symmetrisch, d.h. spiegelbildlich, vorgesehen, so daß sie sich im um die erste Faltlinie zusammengefalteten Zustand überdecken. Durch diese Stanzlöcher hindurch ist die DC-ROM sichtbar.

Bei dem erfindungsgemäßen Umschlag bzw. Beihefter ist das zweite Flächenelement vorzugsweise mit einer kreisbogenförmigen Perforationslinie ausgebildet, die zum entsprechenden Randabschnitt der Ausstanzung im dritten Flächenelement in bezug auf die zweite Faltlinie symmetrisch, d.h. spiegelbildlich, vorgesehen ist. Die beiden Endabschnitt der kreisbogenförmigen Perforationslinie sind miteinander vorzugsweise mittels einer Biegelinie verbunden. Durch diese Biegelinie und die kreisbogenförmige Perforationslinie wird folglich am zweiten Flächenelement ein Flächenabschnitt festgelegt, der für das CD-ROM-Fach gleichsam einen entlang der kreisbogenförmigen Perforationslinie aufreißbaren Deckel bildet. Diese kreisbogenförmige Perforationslinie bildet folglich einen Originalitätsverschluß für das CD-ROM-Fach. Um den besagten Deckel entlang der kreisbogenförmigen Perforationslinie zu gegebener Zeit problemlos öffnen zu können, ist es zweckmäßig, wenn an die kreisbogenförmige Perforationslinie außenseitig ein Fingerloch angrenzt. Demselben Zwecke, d.h. dem einfachen Aufreißen des Deckels entlang der kreisbogenförmigen Perforationslinie ist es dienlich, wenn auch die Ausstanzung im dritten Flächenelement mit einem Fingerloch ausgebildet ist, das mit dem im zweiten Flächenelement ausgebildeten Fingerloch im zusammengefalteten Zustand des Umschlags bzw. Beihefters deckungsgleich vorgesehen ist. Dieses im dritten Flächenelement an die Ausstanzung angrenzende Fingerloch dient außerdem dazu, die im erfindungsgemäßen Umschlag bzw. Beihefter deponierte CD-ROM nach dem Aufreißen des Deckels problemlos aus dem integrierten Fach entnehmen zu können.

Das dritte Flächenelement ist mit dem zweiten Flächenelement und mit dem ersten Flächenelement vorzugsweise verklebt. Zu diesem Zwecke kann das dritte Flächenelement an seiner Innenseite mit Kleberstreifen zur Verklebung mit der Innenseite des zweiten Flächenelementes und an seiner Außenseite mit Kleberstreifen zur Verklebung mit der Innenseite des ersten Flächenelementes versehen sein. Bei einer solchen Ausbildung des erfindungsgemäßen Umschlages bzw Beihefters ist an der Außenseite des dritten Flächenelementes in der Nachbarschaft der zweiten Faltlinie zweckmäßigerweise ein Kleberstreifen mit einer den Einsteckspalt festlegenden Unterbrechung vorgesehen. Diese Unterbrechung weist also zweckmäßigerweise eine Längenabmessung auf, die geringfügig kleiner ist als der Durchmesser der in dem in den Umschlag bzw. Beihefter integrierten Fach deponierten CD-ROM.

Weitere Einzelheiten, Merkmale und Vorteile ergeben sich aus der nachfolgenden Beschreibung eines in der Zeichnung in einem verkleinerten Maßstab gezeichneten Ausführungsbeispieles des erfindungsgemäßen Umschlages bzw. Beihefters im Originalzustand, d.h. vor seiner Zusammenfaltung entlang seiner Faltlinien. Es zeigen:
- Fig. 1: eire Ansicht des Umschlages bzw. Beihefters in Blickrichtung auf seine Innenseite, und
- Fig. 2: seitenverkehrt eine Ansicht des Umschlages bzw. Beihefters in Blickrichtung auf seine Außenseite.

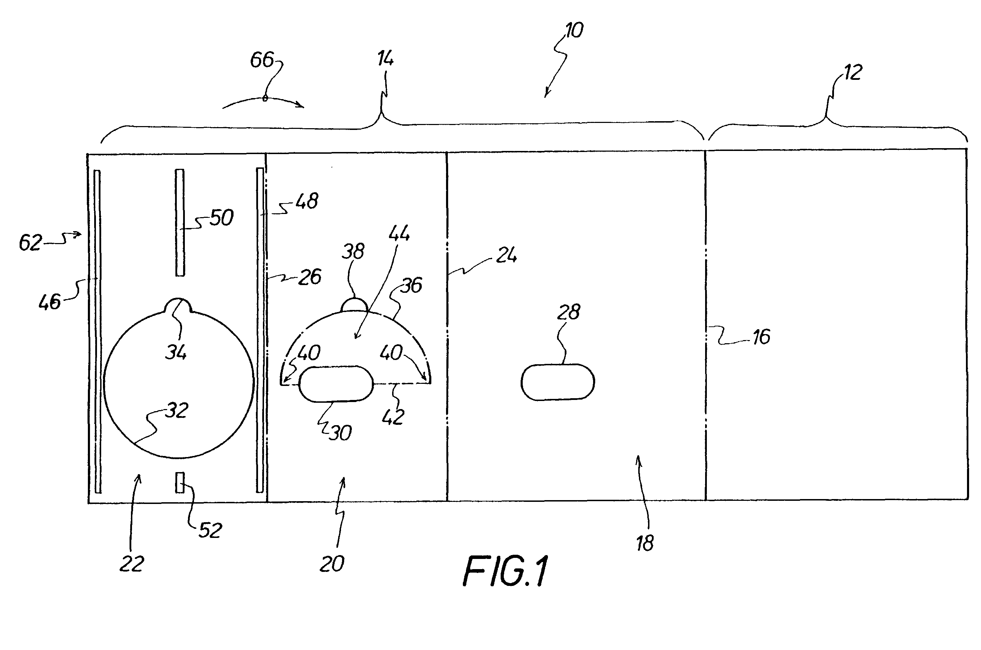

Fig. 1 zeigt im gestreckten, d.h. nicht zusammengefalteten Zustand eine Ausbildung des Umschlages bzw. Beihefters 10, der für eine Zeitschrift vorgesehen ist. Der Umschlag bzw. Beihefter 10 weist ein Rückenteil 12 und ein Vorderteil 14 auf, die miteinander entlang einer Bindefaltlinie 16 einstückig verbunden sind. Das Vorderteil 14 besteht aus einem ersten Flächenelement 18, aus einem zweiten Flächenelement 20 und aus einem dritten Flächenelement 22, wobei das erste und das zweite Flächenelement 18 und 20 miteinander entlang einer ersten Faltlinie 24 und das zweite und das dritte Flächenelement 20 und 22 miteinander entlang einer zweiten Faltlinie 26 einstückig verbunden sind. Die Bindefaltlinie 16, die erste Faltlinie 24 und die zweite Faltlinie 26, sind zueinander parallel orientiert.

Das erste Flächenelement 18 ist mit einem Stanzloch 28 und das zweite Flächenelement 20 ist mit einem Stanzloch 30 ausgebildet, die in bezug zur ersten Faltlinie 24 spiegelbildlich vorgesehen sind.

Das dritte Flächenelement 22 ist mit einer Ausstanzung 32 ausgebildet, die kreisrund gestaltet an eine CD-ROM angepaßt ist. Die Ausstanzung 32 ist oberseitig mit einem Fingerloch 34 ausgebildet. Das zweite Flächenelement 20 ist mit einer kreisbogenförmigen Perforationslinie 36 ausgebildet, die zum entsprechenden Randabschnitt der Ausstanzung 32 im dritten Flächenelement 22 in bezug zur zweiten Faltlinie 26 spiegelbildlich symmetrisch vorgesehen ist. An die kreisbogenförmige Perforationslinie 36 grenzt oberseitig ein Fingerloch 38 an, das in bezug auf die zweite Faltlinie 26 zum Fingerloch 34 im dritten Flächenelement 22 spiegelbildlich symmetrisch vorgesehen ist.

Die beiden Endabschnitte 40 der kreisbogenförmigen Perforationslinie 36 sind miteinander durch eine Biegelinie 42 verbunden, welche das Stanzloch 30 kreuzt. Durch die Biegelinie 42 und die kreisbogenförmige Perforationslinie 36 wird ein Deckel 44 festgelegt.

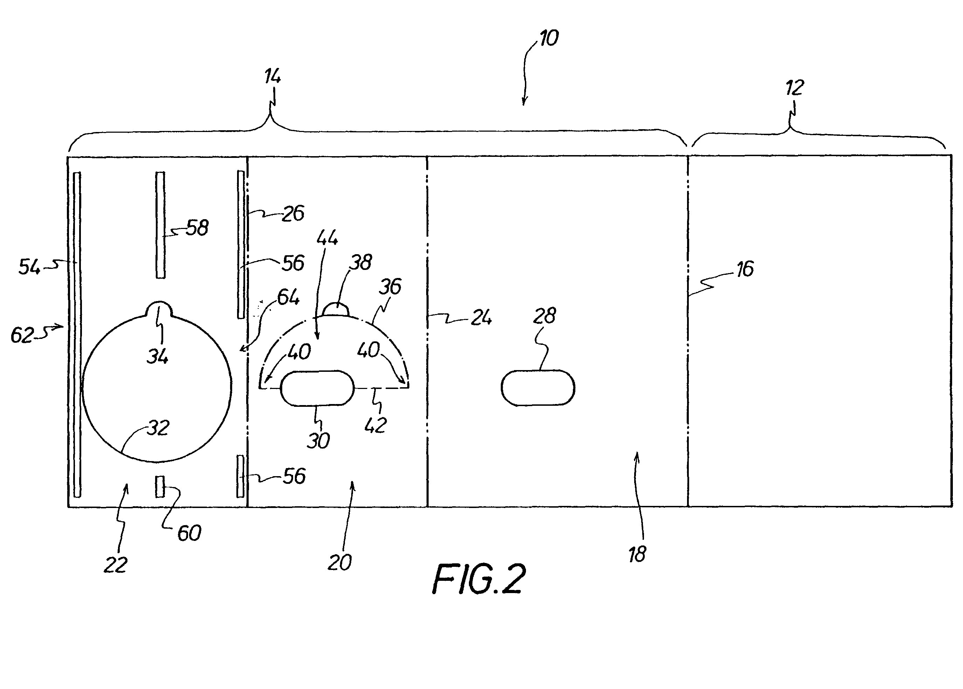

Das dritte Flächenelement 22 ist an seiner Innenseite (Fig. 1) mit Kleberstreifen 46, 48, 50 und 52 versehen. Das dritte Flächenelement 22 ist außerdem an seiner Außenseite (sh. Fig. 2) mit Kleberstreifen 54, 56, 58 und 60 versehen. Die Kleberstreifen 46 und 54 sind am Außenrand 62 des dritten Flächenelementes 22 und die Kleberstreifen 50, 52 und 58, 60 sind in einem mittleren Bereich des dritten Flächenelementes 22 vorgesehen. Der Kleberstreifen 48 verläuft entlang des dritten Flächenelementes 22 in der Nachbarschaft der zweiten Faltlinie 26. Der an der Außenseite des dritten Flächenelementes 22 vorgesehene Kleberstreifen 56 in der Nachbarschaft der zweiten Faltlinie 26 weist eine Unterbrechung 64 auf, durch welche ein Einsteckspalt festgelegt wird, wie nachfolgend ausgeführt wird.

Der Umschlag bzw. Beihefter 10, der bspw. aus einem geeigneten Kartonmaterial besteht, wird nach Ausbildung der Ausstanzung 32 mit dem Fingerloch 34 im dritten Flächenelement 22, dem Stanzloch 30, der kreisbogenförmigen Perforationslinie 36 mit dem Fingerloch 38 und der Biegelinie 42 im zweiten Flächenelement 20 und dem Stanzloch 28 im ersten Flächenelement 18 sowie nach Ausbildung der Kleberstreifen 46 bis 60 bspw. wie folgt zusammengefaltet: Zuerst wird das dritte Flächenelement 22 um die zweite Faltlinie 26 herum derartig zusammengefaltet, daß die Innenseite des dritten Flächenelementes 22 an der Innenseite des zweiten Flächenelementes 20 anliegt. Diese Zusammenfaltung ist in Fig. 1 durch den bogenförmigen Pfeil 66 angedeutet. Dabei ergibt sich durch die Kleberstreifen 46, 48, 50 und 52 eine flächige Verbindung des dritten Flächenelementes 22 mit dem zweiten Flächenelement 20. Anschließend wird das zusammengefaltete Gebilde aus zweitem und drittem Flächenelement 20, 22 um die erste Faltlinie 24 herum zusammengefaltet, wobei nun die Außenseite des dritten Flächenelementes 22 an der Innenseite des ersten Flächenelementes 18 flächig zur Anlage kommt und die Außenseite des dritten Flächenelementes 22 durch die an ihr vorgesehenen Kleberstreifen 54, 56, 58 und 60 mit der Innenseite des ersten Flächenelementes 18 flächig verbunden wird. Dabei ergibt sich durch den Kleberstreifen 54 eine Verbindung am rechten Rand der ersten Faltlinie 24 (sh. Fig. 1) und durch den die Unterbrechung 64 aufweisenden Kleberstreifen 56 eine Verbindung der Außenseite des dritten Flächenelementes 22 rechts vom Stanzloch 28 im ersten Flächenelement 18. Durch die Unterbrechung 64 wird also ein Einsteckspalt zum Einstecken einer CD-ROM in das durch die Zusammenfaltungen bzw. durch die Ausstanzung 32 im dritten Flächenelement 22 gebildeten CD-ROM-Fach festgelegt, wobei das CD-ROM-Fach also integrales Bestandteil des Umschlages bzw. Beihefters 10 ist.

Gleiche Einzelheiten sind in den Figuren 1 und 2 jeweils mit denselben Bezugsziffern bezeichnet.

## Patentansprüche

1. Umschlag bzw. Beihefter für eine Zeitschrift, der ein Rückenteil (12) und ein Vorderteil (14) aufweist, die miteinander entlang einer Bindefaltlinie (16) verbunden sind, wobei das Vorderteil (14) ein Fach für eine CD-ROM aufweist, das in das Vorderteil (14) des Umschlags bzw. des Beihefters integriert ist,
**dadurch gekennzeichnet,**
**daß** das Vorderteil (14) aus einem ersten Flächenelement (18), einem mit dem ersten Flächenelement (18) entlang einer ersten Faltlinie (24) verbundenen zweiten Flächenelement (20) und einem mit dem zweiten Flächenelement (20) entlang einer zweiten Faltlinie (26) verbundenen dritten Flächenelement (22) besteht, wobei die erste und die zweite Faltlinie (24, 26) zueinander und zur Bindefaltlinie (16) parallel orientiert sind, das erste und das zweite Flächenelement (18, 20) jeweils mit einem Stanzloch (28, 30) ausgebildet sind, das dritte Flächenelement (22) mit einer an die CD-ROM angepaßten Ausstanzung (32) ausgebildet ist, und das erste, das zweite und das dritte Flächenelement (18, 20, 22) miteinander derart verklebt sind, daß an der zweiten Faltlinie (26) zwischen dem zweiten und dem dritten Flächenelement (18, 22) ein Einsteckspalt (64) für die CD-ROM verbleibt.

2. Umschlag bzw. Beihefter nach Anspruch 1,
**dadurch gekennzeichnet,**
**daß** der Einsteckspalt an den Durchmesser der CD-ROM angepaßt ist.

3. Umschlag bzw. Beihefter nach Anspruch 1,
**dadurch gekennzeichnet,**
**daß** die beiden Stanzlöcher (28, 30) im ersten und im zweiten Flächenelement (18, 20) in bezug auf die erste Faltlinie (24) spiegelbildlich symmetrisch vorgesehen sind.

4. Umschlag bzw. Beihefter nach Anspruch 1,
**dadurch gekennzeichnet,**
**daß** das zweite Flächenelement (20) mit einer kreisbogenförmigen Perforationslinie (36) ausgebildet ist, die zum entsprechenden Randabschnitt der Ausstanzung (32) im dritten Flächenelement (22) in bezug auf die zweite Faltlinie (26) spiegelbildich symmetrisch vorgesehen ist.

5. Umschlag bzw. Beihefter nach Anspruch 4,
**dadurch gekennzeichnet,**
**daß** die beiden Endabschnitte (40) der kreisbogenförmigen Perforationslinie (36) miteinander mittels einer Biegelinie (42) verbunden sind.

6. Umschlag bzw. Beihefter nach Anspruch 4,
**dadurch gekennzeichnet,**
**daß** an die kreisbogenförmige Perforationslinie (36) ein Fingerloch (38) angrenzt.

7. Umschlag bzw. Beihefter nach Anspruch 4 und 6,
**dadurch gekennzeichnet,**
**daß** die Ausstanzung (32) im dritten Flächenelement (22) mit einem Fingerloch (34) ausgebildet ist, das mit dem im zweiten Flächenelement (20) ausgebildeten Fingerloch (38) im zusammengefalteten Zustand deckungsgleich vorgesehen ist.

8. Umschlag bzw. Beihefter nach einem der Ansprüche 1 bis 7,
**dadurch gekennzeichnet,**
**daß** das dritte Flächenelement (22) mit dem zweiten Flächenelement (20) und mit dem ersten Flächenelement (18) verklebt ist.

9. Umschlag nach Anspruch 8,
**dadurch gekennzeichnet,**
**daß** das dritte Flächenelement (22) an seiner Innenseite mit Kleberstreifen (46, 48, 50, 52) zur Verklebung mit der Innenseite des zweiten Flächenelementes (20) und an seiner Außenseite mit Kleberstreifen (54, 56, 58, 60) zur Verklebung mit der Innenseite des ersten Flächenelementes (18) versehen ist.

10. Umschlag bzw. Beihefter nach Anspruch 9,
**dadurch gekennzeichnet,**
**daß** an der Außenseite des dritten Flächenelementes (22) in der Nachbarschaft der zweiten Faltlinie (26) ein Kleberstreifen (56) mit einer den Einsteckspalt festlegenden Unterbrechung (64) vorgesehen ist.

## Claims

1. Cover or bind-in insert for a periodical, which has a rear part (12) and a front part (14) which are connected to one another along a binding/folding line (16), the front part (14) having a compartment which is intended for a CD-ROM and is integrated in the front part (14) of the cover or of the bind-in insert, **characterized in that** the front part (14) comprises a first sheet-like element (18), a second sheet-like element (20), which is connected to the first sheet-like element (18) along a first folding line (24), and a third sheet-like element (22), which is connected to the second sheet-like element (20) along a second folding line (26), the first and the second folding lines (24, 26) being oriented parallel to one another and the binding/folding line (16), the first and the second sheet-like elements (18, 20) each being designed with a punched hole (28, 30), the third sheet-like element (22) being designed with a punched-out portion (32) adapted to the CD-Rom, and the first, the second and the third sheet-like elements (18, 20, 22) being adhesively bonded to one another such that an insertion gap (64) for the CD-ROM remains on the second folding line (26) between the second and third sheet-like elements (20, 22).

2. Cover or bind-in insert according to Claim 1, **characterized in that** the insertion gap is adapted to the diameter of the CD-ROM.

3. Cover or bind-in insert according to Claim 1, **characterized in that** the two punched holes (28, 30) in the first and in the second sheet-like elements (18, 20) are provided in mirror-inverted symmetry in relation to the first folding line (24).

4. Cover or bind-in insert according to Claim 1, **characterized in that** the second sheet-like element (20) is designed with a circle-arc-shaped perforation line (36) which is provided in mirror-inverted symmetry, in relation to the second folding line (26), with the corresponding border section of the punched-out portion (32) in the third sheet-like element (22).

5. Cover or bind-in insert according to Claim 4, **characterized in that** the two end sections (40) of the circle-arc-shaped perforation line (36) are connected to one another by means of a bending line (42).

6. Cover or bind-in insert according to Claim 4, **characterized in that** a finger hole (38) borders the circle-arc-shaped perforation line (36).

7. Cover or bind-in insert according to Claims 4 and 6, **characterized in that** the punched-out portion (32) in the third sheet-like element (22) is designed with a finger hole (34) which is provided congruently, in the folded-together state, with the finger hole (38) formed in the second sheet-like element (20).

8. Cover or bind-in insert according to one of Claims 1 to 7, **characterized in that** the third sheet-like element (22) is adhesively bonded to the second sheet-like element (20) and to the first sheet-like element (18).

9. Cover or bind-in insert according to Claim 8, **characterized in that** the third sheet-like element (22) is provided, on its inside, with adhesive strips (46, 48, 50, 52) for adhesive bonding to the inside of the second sheet-like element (20) and, on its outside, with adhesive strips (54, 56, 58, 60) for adhesive bonding to the inside of the first sheet-like element (18).

10. Cover or bind-in insert according to Claim 9, **characterized in that** provided on the outside of the third sheet-like element (22), in the vicinity of the second folding line (26), is an adhesive strip (56) with an interruption (64) defining the insertion gap.

## Revendications

1. Couverture ou encart de magazine, du type comportant une partie amère (12) et une partie avant (14) qui sont réunies ensemble le long d'une bande pliée (16), la partie avant (14) comportant, pour un CD-ROM une pochette qui est intégrée dans la partie avant (14) de la couverture ou de l'encart, **caractérisés en ce que** la partie avant (14) se compose d'un premier élément plat (18), d'un deuxième élément plat (20) réuni au premier élément plat (18) le long d'une première ligne de pliage (24), et d'un troisième élément plat (22) réuni au deuxième élément plat (20) le long d'une seconde ligne de pliage (26), la première et la seconde lignes de pliage (24, 26) étant orientée parallèlement l'une à l'autre et à la bande pliée (16), le premier et le deuxième élément plat (18, 20) comportant chacun un trou poinçonné (28, 30) respectivement, le troisième élément plat (22) comportant une découpe (32) adaptée au CD-ROM et le premier, le deuxième et le troisième éléments plats (18, 20, 22) étant collés les uns aux autres de manière telle qu'à la seconde ligne de pliage (26), il subsiste entre le deuxième et le troisième élément plat (20,22) une fente d'insertion (64) pour le CD-ROM.

2. Couverture ou encart selon la revendication 1, **caractérisés en ce que** la fente d'insertion est adaptée au diamètre du CD-ROM.

3. Couverture ou encart selon la revendication 1, **caractérisés en ce que** les deux trous poinçonnés (28, 30) dans le premier et le deuxième élément plat (18, 20) sont prévus optiquement symétriques par rapport à la première ligne de pliage (24).

4. Couverture ou encart selon la revendication 1, **caractérisés en ce que** le deuxième élément plat (20) comporte une ligne de perforations en arc de cercle (36), prévue optiquement symétrique à la section marginale correspondante de la découpe (32) du troisième élément plat par rapport à la seconde ligne de pliage (26).

5. Couverture ou encart selon la revendication 4, **caractérisés en ce que** les deux sections terminales (40) de la ligne de perforations en arc de cercle (36) sont réunies ensemble au moyen d'une ligne de flexion (42).

6. Couverture ou encart selon la revendication 1, **caractérisés en ce que** la ligne de perforations en arc de cercle (36) est délimitée par un passage de doigt (38).

7. Couverture ou encart selon les revendications 4 et 6, **caractérisés en ce que** la découpe (32) dans le troisième élément plat (22) comporte un passage de doigt (34) qui est prévu pour correspondre au passage de doigt (38) du deuxième élément plat (20), à l'état replié de l'ensemble.

8. Couverture ou encart selon l'une quelconque des revendications 1 à 7, **caractérisés en ce que** le troisième élément plat (22) est collé au deuxième élément plat (20) et au premier élément plat (18).

9. Couverture ou encart selon la revendication 8, **caractérisés en ce que** le troisième élément plat (22) est prévu avec une bande de colle (46, 48, 50, 52) sur sa face inteme en vue de son collage avec la face inteme du deuxième élément plat (20) et avec une bande de colle (54, 56, 58, 60) sur sa face externe en vue de son collage avec la face inteme du premier élément plat (18).

10. Couverture ou encart selon la revendication 9, **caractérisés en ce que** sur la face externe du troisième élément plat (22) est prévue, au voisinage de la seconde ligne de pliage (26), une bande de colle (56) présentant une interruption (64) à l'emplacement de la fente d'insertion.
